# EUROPEAN PATENT SPECIFICATION

(11) **EP 1 486 122 B1**
(45) Date of publication and mention of the grant of the patent: **08.08.2007**
(21) Application number: 04013542.8
(22) Date of filing: 09.06.2004
(51) Int. Cl.: A21B 3/13

(54) **Baking pan support foot**
Stützfuss für ein Backblech
Pied de support pour moule de cuisson

(30) Priority: 11.06.2003 IT MI20031171
(43) Date of publication of application: 15.12.2004
(73) Proprietor: Pavoni Italia S.p.a., 24040 Suisio (BG) (IT)
(72) Inventor: Raineri, Paolo, 24040 Suisio (BG) (IT)
(74) Representative: Premru, Rok

(56) References cited:
- WO-A-03/015592
- GB-A- 638 697
- US-A- 2 037 807
- US-A- 2 058 807
- US-A- 2 198 106
- US-A- 5 491 869

## Description

The present invention relates to a baking pan support foot.

Handleless rectangular pans, i.e. baking pans, are known to be used for baking flour doughs for cakes, pizzas and pies.

Such baking pans are known (US-A-2198106) to be stored by using pan cars having racks for pan stacking.

This invention has the object of providing an alternative arrangement for the storage and handling of baking pans.

Such object is fulfilled by providing a support foot according to the characterising portion of claim 1.

Further advantages of this invention may be obtained thanks to the additional characteristics of the dependent claims 2 to 5.

A possible embodiment of the invention, as claimed in the attached claims, will be described hereafter with reference to the accompanying drawings, in which:

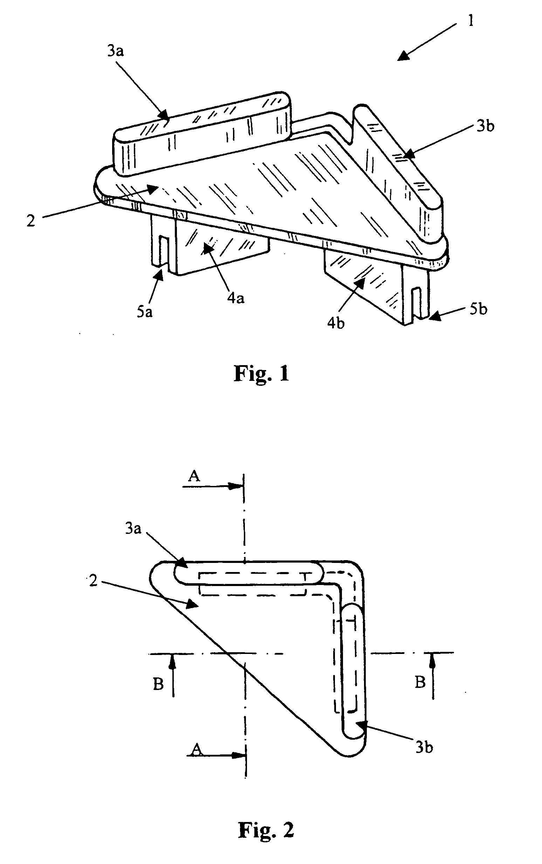

- Fig. 1 is a perspective view of the invention;
- Fig. 2 is a plan view of the invention;

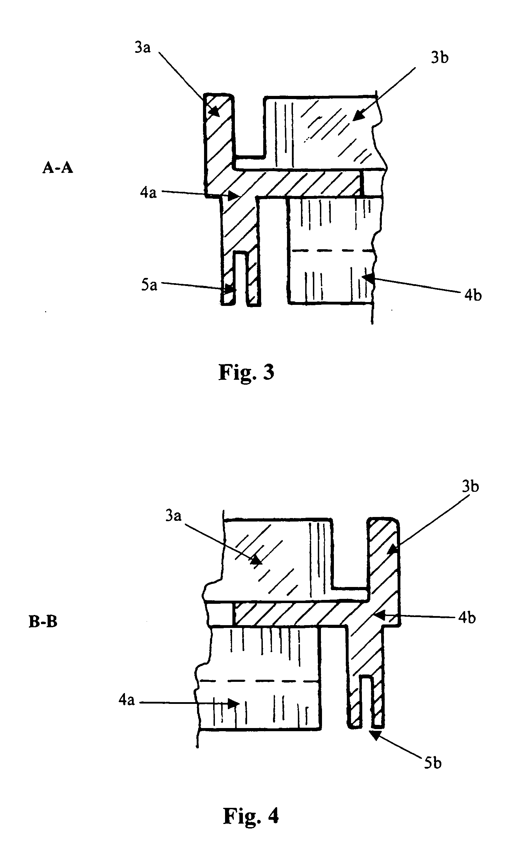

- Fig. 3 is a side view, partially cross-sectioned of the invention;
- Fig. 4 is a second side view, partially cross-sectioned of the invention;

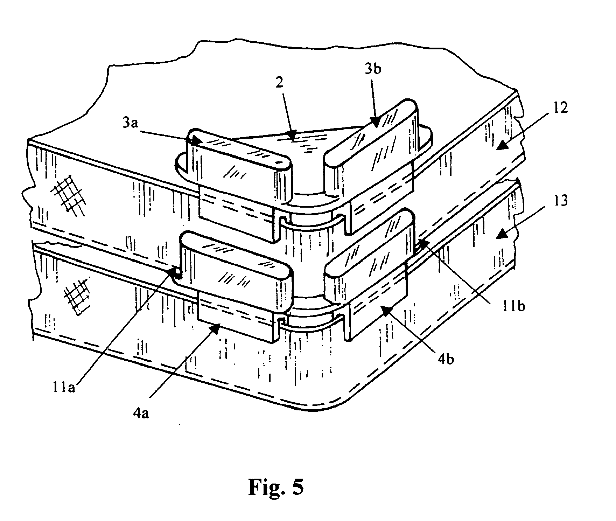

- Fig. 5 shows a stack of backing pans joined together by the feet according to the invention.

Referring now to the drawings, the reference numeral 1 generally denotes a baking pan support foot including a substantially plate-like member 2 having two first orthogonal ribs 3a, 3b on one side, which are arranged to externally engage the corners 11a, 11b of an overlying baking pan 12.

On the other side, the plate like member 2 has two second ribs 4a, 4b, which are also orthogonal to each other.

Each of the second ribs 4a, 4b has a groove 5a, 5b for engaging the edges of an underlying baking pan 13.

By using such support feet at the four corners of the baking pans a stack of mutually locked baking pans may be formed.

Those skilled in the art will appreciate that these feet allow to effectively and easily solve the problem of storing and handling full baking pans.

Particularly, the interposition of the feet between one baking pan and the other, prevents the contents of one baking pan from being squeezed by the overlying baking pan.

Furthermore, the support feet keep the baking pans in mutually locked positions and prevent them from falling while being handled.

Yet another advantage is that the feet may be used on baking pans of any size.

The height of the ribs 3a, 3b and 4a, 4b and the depth of the grooves 5a, 5b may vary as a function of the distance to be maintained between contiguous baking pans.

In a preferred embodiment, the substantially plate-like member 2 has a generally and/or substantially triangular shape.

Preferably, the support foot is wholly made of elastic rubber.

Such characteristic is particularly interesting in that it simplifies the assembly and disassembly of the foot on and from the comers of the baking pans and further allows to dampen the vibrations incurred by the stacks of baking pans during handling.

More preferably, the feet may be made from platinum-cured silicone rubber, i.e. a silicone rubber that is cured by using platinum as a catalyst.

The use of platinum-cured silicone rubber as a material for the foot is particularly advantageous both in that it effectively withstands baking oven temperatures (typically 150-200°C) and in that it is suitable for food applications.

Also, the silicone rubber feet may be fabricated easily and at a low cost, in a wide range of colors.

In an alternative embodiment, the first ribs 3a, 3b and/or the second ribs 4a, 4b are joined together to form an "L" shaped edge.

## Claims

1. A baking pan (1) support foot, comprising a substantially plate-like member (2), which has two first orthogonal ribs (3a, 3b) on one side and two second orthogonal ribs (4a, 4b) on the other side, **characterised in that** each of said second ribs (4a, 4b) having a groove (5a, 5b) therein.

2. A baking pan support foot as claimed in claim 1, modified in that said two first ribs (3a, 3b) and/or said two second ribs (4a, 4b) are joined together.

3. A baking pan support foot as claimed in claim 1 or 2, wherein said substantially plate-like member (2) has a generally and/or substantially triangular shape.

4. A baking pan support foot as claimed in claim 1 or 2 or 3, **characterized in that** it is wholly made of rubber.

5. A baking pan support foot as claimed in claim 1 or 2 or 3, **characterized in that** it is made of platinum-cured silicone rubber.

## Patentansprüche

1. Stützfuß für ein Backblech (1), umfassend ein im Wesentlichen plattenartiges Teil (2), das zwei erste orthogonale Rippen (3a, 3b) auf der einen Seite und zwei zweite orthogonale Rippen (4a, 4b) auf der anderen Seite aufweist, **dadurch gekennzeichnet, dass** jede der genannten zweiten Rippen (4a, 4b) darin eine Nut (5a, 5b) hat.

2. Stützfuß für ein Backblech nach Anspruch 1, **dadurch** abgewandelt, dass die beiden genannten ersten Rippen (3a, 3b) und/oder die beiden genannten zweiten Rippen (4a, 4b) miteinander verbunden sind.

3. Stützfuß für ein Backblech nach Anspruch 1 oder 2, wobei das besagte im Wesentlichen plattenartige Teil (2) eine ungefähr und/oder im Wesentlichen dreieckige Form aufweist.

4. Stützfuß für ein Backblech nach Anspruch 1, 2 oder 3, **dadurch gekennzeichnet, dass** es ganz aus Gummi hergestellt ist.

5. Stützfuß für ein Backblech nach Anspruch 1, 2 oder 3, **dadurch gekennzeichnet, dass** es ganz aus platin-behandeltem Silikon-Gummi hergestellt ist.

## Revendications

1. Pied support pour moule de cuisson (1) comprenant un élément formant substantiellement plaque (2) qui a sur un côté deux premières nervures orthogonales (3a, 3b) et sur l'autre côté deux secondes nervures orthogonales (4a, 4b), **caractérisé en ce que** chacune des secondes nervures (4a, 4b) a elle-même une rainure (5a, 5b).

2. Pied support pour moule de cuisson selon la revendication 1, modifié en ce que lesdites deux premières nervures (3a, 3b) et/ou lesdites deux secondes nervures (4a, 4b) sont liées ensemble.

3. Pied support pour moule de cuisson selon les revendications 1 ou 2, dans lequel ledit élément formant substantiellement plaque (2) a globalement et/ou essentiellement une forme triangulaire.

4. Pied support pour moule de cuisson selon les revendications 1 ou 2 ou 3, **caractérisé en ce qu'**il est réalisé en totalité en caoutchouc.

5. Pied support pour moule de cuisson selon les revendications 1 ou 2 ou 3, **caractérisé en ce qu'**il est réalisé en totalité en caoutchouc silicone de platine vulcanisé.
